# EUROPÄISCHE PATENTANMELDUNG

(11) **EP 1 874 084 A2**
(43) Veröffentlichungstag der Anmeldung: **02.01.2008**
(21) Anmeldenummer: 07109570.7
(22) Anmeldetag: 05.06.2007
(51) Int. Cl.: H04R 5/02

(54) **Hörvorrichtungen mit spezieller Stromquelle**

(30) Priorität: 26.06.2006 DE 102006029197
(71) Anmelder: Siemens Audiologische Technik GmbH, 91058 Erlangen (DE)
(72) Erfinder: Geiger, Wolfgang, Dr., 91611 Lehrberg (DE)
(74) Vertreter: Berg, Peter

(57) **Zusammenfassung**

Hörvorrichtungen und insbesondere Hörgeräte sollen kleiner gestaltet werden. Hierzu ist vorgesehen, die im Ohrkanal tragbare Schale oder Otoplastik (4) bzw. das Gehäuse der Hörvorrichtung aus Batterieschichten (5) zu fertigen, so dass die Schale oder Otoplastik bzw. das Gehäuse der Hörvorrichtung selbst die Batterie darstellt. Alternativ kann auch die Hörgerätebatterie von einem konventionellen Hörgerät in eine gewöhnliche Otoplastik ausgelagert werden, wodurch auch das Volumen des Hörgeräts reduziert wird. Durch die Volumenreduktion lässt sich die Akzeptanz zum Tagen eines Hörgeräts deutlich erhöhen, und es kann leichter eine Variante der Hörvorrichtung als Cymba-Gerät realisiert werden.

## Beschreibung

Die vorliegende Erfindung betrifft eine Hörvorrichtung mit einer Schale, die zumindest teilweise im Ohrkanal tragbar ist. Darüber hinaus betrifft die vorliegende Erfindung ein Hinter-dem-Ohr-Hörgerät mit einem Gehäuse zum Tragen hinter dem Ohr, einer Otoplastik zum Tragen in/an dem Gehörgang des Ohrs, einer Verbindungsleitung, über die die Otoplastik mit dem Gehäuse verbunden ist, und einer Stromquelle.

Hörvorrichtungen und insbesondere Hörgeräte werden in der Regel über eine Batterie mit Strom versorgt. Die Batterie ist meist in einem Batteriefach in dem Gehäuse der Hörvorrichtung, speziell in dem Hörgerätegehäuse, untergebracht.

Um Hörgeräte möglichst klein zu gestalten, werden als Stromquellen kleine Knopfzellen eingesetzt. Aber auch diese Knopfzellen verbrauchen verhältnismäßig viel Platz im Hörgerätegehäuse. Nicht selten beanspruchen sie ca. 15% bis 30% des gesamten Gehäuseinnenraums. Die Folge davon ist, dass die Hörgerätegehäuse entsprechend voluminös zu gestalten sind.

Ein weiteres Problem der kleinen Batterien betrifft den Batteriewechsel. Für ältere Hörgeräteträger ist dieser Batteriewechsel oftmals aufgrund verminderter Taktilität ausgesprochen schwierig.

Die Patentschrift US 6,058,198 beschreibt eine Batterie und eine Schaltungsanordnung für ein Hörgerät. Die Elektronikschaltung besitzt ein abgeschlossenes Gehäuse mit einer Luftkatode/Separator-Anordnung einschließlich einer Katalysatorschicht. Das Gehäuse ist mit einer Elektrolyt/Anoden-Mischung gefüllt, um eine Batterie für die Elektronikschaltung zu schaffen.
Aus der Druckschrift DE 298 01 567 U1 ist ein hinter dem Ohr tragbares Hörhilfegerät mit einem Gehäuse bekannt. Außerdem weist es ein Ohrpassstück auf, das im Gehörgang des Ohrs getragen wird. Dieses Ohrpassstück weist einen Hörer auf, der über eine elektrische Leitung von einem Verstärker in dem Hörgerätegehäuse versorgt wird. In dem Hörgerätegehäuse ist weiterhin eine Batterie vorgesehen.

Des Weiteren offenbart die Druckschrift US 6 208 741 B1 einen Batteriebehälter für Ohrkanal-Hörgeräte. Der Batteriebehälter wird selbst in den Ohrkanal eingeführt und ist elektrisch und mechanisch mit dem Hörgerät verbunden.

Die Aufgabe der vorliegenden Erfindung besteht darin, Hörvorrichtungen und insbesondere Hörgeräte kleiner zu gestalten.

Erfindungsgemäß wird diese Aufgabe gelöst durch eine Hörvorrichtung mit einer Schale, die zumindest teilweise im Ohrkanal tragbar ist, wobei die Schale aus Batterieschichten gefertigt ist und eine Stromquelle für die Hörvorrichtung bildet.

Darüber hinaus ist erfindungsgemäß vorgesehen ein Hinter-dem-Ohr-Hörgerät mit einem Gehäuse zum Tragen hinter dem Ohr, einer Otoplastik zum Tragen in/an dem Gehörgang des Ohrs, einer Verbindungsleitung, über die die Otoplastik mit dem Gehäuse verbunden ist, und einer Stromquelle, wobei die Stromquelle in der Otoplastik angeordnet ist und Energie über die Verbindungsleitung zu dem Gehäuse liefert oder das Gehäuse selbst die Stromquelle darstellt.

Entsprechend der vorliegenden Erfindung ergibt sich somit eine Verkleinerung der Hörvorrichtung dadurch, dass die Schale der Hörvorrichtung selbst die Batterie bildet, bzw. dadurch, dass die Batterie in eine Otoplastik außerhalb des Hörgerätegehäuses ausgelagert wird.

Entsprechend einer erfindungsgemäßen Variante ist die Hörvorrichtung als In-dem-Ohr-Hörgerät (IdO) ausgebildet, wobei die Schale das Hörgerätegehäuse darstellt. Hierdurch kann die speziell für IdOs so wichtige Volumenreduzierung deutlich vorangetrieben werden.

Gemäß einer anderen Variante ist die Vorrichtung als Hinter-dem-Ohr-Hörgerät (HdO) ausgebildet, wobei die Schale eine im/am Gehörgang tragbare Otoplastik darstellt, welche elektrisch mit einer hinter dem Ohr tragbaren Elektronikeinheit des HdOs verbunden ist. Auf diese Weise kann der vielfach in der Otoplastik zur Verfügung stehende Raum zur Stromerzeugung genutzt werden.

Die Otoplastik kann elektrisch ausschließlich als Stromquelle dienen und keine anderen elektronischen Komponenten, die einer anderen elektronischen Funktionalität dienen, beinhalten. Somit erhält die vielfach nur mechanisch genutzte Otoplastik eine weitere, nämlich elektrische Funktionalität: die Stromerzeugung.

Alternativ kann die Otoplastik aus elektrischer Sicht auf zwei Funktionalitäten beschränkt sein, nämlich die Funktionalität einer Stromquelle und die eines elektroakustischen Schallwandlers. Dadurch können auch Gerätevarianten, bei denen der Schall direkt in der Otoplastik erzeugt wird, von der Erfindung profitieren.

Die Verbindung zwischen dem HdO und der daran angeschlossenen Otoplastik kann durch einen Schallschlauch mit elektrischen Leitungen erfolgen, wobei die Leitungen der Stromversorgung des HdOs dienen. Gegebenenfalls werden über die Leitungen auch gleichzeitig Daten- und/oder Steuersignale übertragen. Der Schallschlauch kann aus leitfähigen Materialien wie Metalle, Legierungen, Kunststoffe bestehen oder teilweise zu diesem Zweck enthalten.

Die Stromquelle die in Form eines Gehäuses ausgebildet ist oder die aus dem Hörgerätegehäuse in eine externe Otoplastik ausgelagert ist, kann wiederaufladbar sein. Dadurch lassen sich insbesondere dann Vorteile erzielen, wenn die Schale bzw. die gesamte Hörvorrichtung in einem aufwändigen Prozess individuell angepasst wurde und die Hörvorrichtung am Ende der Batterielebensdauer nicht weggeworfen werden muss.

Die vorliegende Erfindung wird nun anhand der beigefügten Zeichnungen näher erläutert, in denen zeigen:
- FIG 1: ein HdO gemäß dem Stand der Technik;
- FIG 2: eine erfindungsgemäße Hörvorrichtung, die in der Cymba zu tragen ist, mit Batteriegehäuse bzw. ausgelagerter Batterie;
- FIG 3: eine Otoplastik mit erfindungsgemäßem Schichtaufbau;
- FIG 4: ein IdO gemäß dem Stand der Technik und
- FIG 5: ein erfindungsgemäßes IdO mit Batterieschichtgehäuse.

Die nachfolgend näher geschilderten Ausführungsbeispiele stellen bevorzugte Ausführungsformen der vorliegenden Erfindung dar.

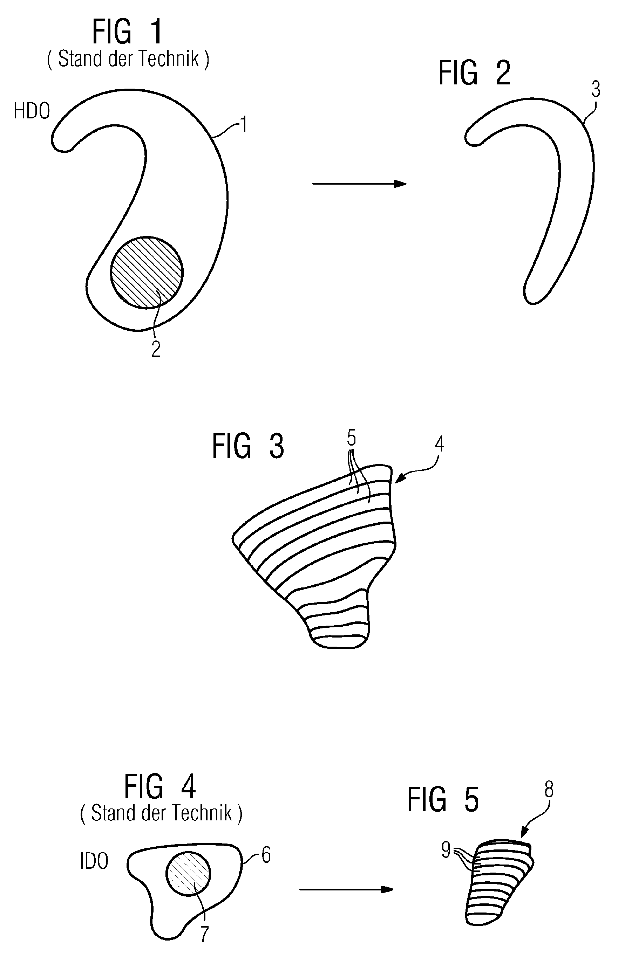

In FIG 1 ist zunächst ein HdO herkömmlicher Bauart schematisch wiedergegeben. Das Gehäuse 1 besteht aus einem gespritzten Kunststoff oder einem lithografisch hergestellten Kunststoffkörper. In dem Gehäuse befindet sich an sich nicht sichtbar eine Hörgerätebatterie 2, die zur Verdeutlichung ihrer Größe in FIG 1 symbolisch angedeutet ist. Die Batterie 2 nimmt ca. 15% bis 30% des Innenraums des Hörgerätegehäuses 1 ein.

Erfindungsgemäß ist nun vorgesehen, die Batterie aus dem HdO auszulagern. Dadurch lässt sich ein HdO der in FIG 2 dargestellten Bauart herstellen. Dieses HdO besitzt ein wesentlich schlankeres Gehäuse 3, da es keine Batterie beherbergen muss. Damit ist eine Trageweise in der Gehörmuschel, aber auch hinter dem Ohr möglich.

Die Batterie ist in eine Otoplastik integriert, ähnlich der von FIG 3. Prinzipiell kann eine konventionelle Knopfbatterie in der Otoplastik untergebracht werden. Die Stromversorgung des HdO erfolgt dann über Stromversorgungsleitungen, die von der Otoplastik zum HdO führen. Die Stromversorgungsleitungen können in einen Schallschlauch integriert werden, der ohnehin das HdO mit der Otoplastik verbindet.

Entsprechend einer weiteren, in FIG 3 dargestellten Ausführungsform ist die Otoplastik 4 bzw. Schale eines HdO aus zahlreichen Batteriefolienschichten 5 aufgebaut. Derartige Batteriefolien sind beispielsweise in der Druckschrift WO 01/41246 A1 beschrieben.

Bei der Fertigung wird ein Ohrabdruck eines Patienten genommen. Dieser Ohrabdruck wird mit einem speziellen Scanner optisch abgetastet, so dass entsprechende Digitaldaten bezüglich der räumlichen Gestalt des Abdrucks gewonnen werden können. Diese Information ist auch durch "In-Ohr-Scan"-Technik zu erreichen ohne, dass ein Abdruck vom Gehörgang gemacht werden muss. Aus diesen Digitaldaten werden ähnlich wie bei der Lithographie Schichtkonturendaten gewonnen. Anhand dieser Schichtkonturendaten werden für jede Schicht entsprechende Gebilde aus einer Batteriefolie ausgestanzt oder hergestellt. Die einzelnen Batteriefolieschichten werden dann miteinander verpresst und zu einer Gesamtbatterie miteinander verschaltet. Damit bekommt die Otoplastik die elektrische Funktionalität einer Batterie. Die Stromversorgungsleitungen zum HdO werden wie in dem obigen Beispiel ausgeführt.

Dadurch, dass die Batterie aus dem HdO ausgelagert ist, lässt sich das HdO deutlich verkleinern. Es kann dann zu einem Cymba-Concha-Gerät umgestaltet werden. Es kann dann aber auch als anderes Ohrmuschelgerät ausgebildet werden. Insgesamt lässt sich so die Baugröße des Hörgeräts reduzieren, so dass es beim Tragen weniger auffällig ist. Letztendlich sinkt somit die Hemmschwelle, ein Hörgerät zu tragen.

In FIG 4 ist ein IdO gemäß dem Stand der Technik schematisch wiedergegeben. Das konventionelle IdO-Gehäuse 6, das beispielsweise mit einem Rapid-Prototyping-Verfahren hergestellt ist, beherbergt ebenfalls eine Batterie 7. Diese ist in FIG 4 wiederum schematisch angedeutet.

Entsprechend einer weiteren erfindungsgemäßen Variante wird das IdO-Gehäuse 8 selbst als Batterie ausgestaltet. Hierzu wird das IdO-Gehäuse 8 gemäß FIG 5 wie die oben beschriebene Otoplastik 4 aus Batteriefolienschichten 9 hergestellt. Somit kann auch bei dem IdO auf eine separate Batterie verzichtet werden, wodurch der gesamte Bauraum des IdOs verkleinert wird. Die Fertigung der IdO-Schale bzw. des IdO-Gehäuses 8 erfolgt wie die der Otoplastik von FIG 3.

Dadurch, dass sich das Volumen des IdOs verkleinert, kann es schlanker ausgeführt werden, so dass es sich tiefer in den Gehörgang einsetzen lässt. Dadurch ergeben sich wiederum kosmetische Vorteile und damit erhöhte Akzeptanz.

Eine Batterieotoplastik kann als reines Verbrauchsmaterial mit kurzer Lebenszeit realisiert werden. Die Batterielebenszeit beträgt typischerweise zwei Wochen bis zwei Monate. Alternativ kann auch eine wiederaufladbare Otoplastik, die aus wiederaufladbaren Folienschichten aufgebaut ist, hergestellt werden. Durch das Wiederaufladen lässt sich die Nutzung beispielsweise auf zwei Jahre verlängern. In ähnlicher Weise kann auch eine IdO-Schale wiederaufladbar und nicht wiederaufladbar hergestellt werden.

## Patentansprüche

1. Hörvorrichtung mit
- einer Schale (4, 8), die zumindest teilweise im Ohrkanal tragbar ist,
**dadurch gekennzeichnet, dass**
- die Schale (4, 8) aus Batterieschichten (5, 9) gefertigt ist und eine Stromquelle für die Hörvorrichtung bildet.

2. Hörvorrichtung nach Anspruch 1, die als In-dem-Ohr-Hörgerät ausgebildet ist, wobei die Schale (4, 8) das Hörgerätegehäuse darstellt.

3. Hörvorrichtung nach Anspruch 1, die als Hinter-dem-Ohr-Hörgerät ausgebildet ist, wobei die Schale (4, 8) eine im/am Gehörgang tragbare Otoplastik darstellt, welche elektrisch mit einer hinter dem Ohr tragbaren Elektronikeinheit des Hinter-dem-Ohr-Hörgeräts verbunden ist.

4. Hörvorrichtung nach Anspruch 3, wobei die Otoplastik elektrisch ausschließlich als Stromquelle dient und keine anderen elektrischen Komponenten, die einer anderen elektronischen Funktionalität dienen, beinhaltet.

5. Hörvorrichtung nach Anspruch 3, wobei die Otoplastik elektrisch ausschließlich zwei elektronische Funktionalitäten beinhaltet, nämlich die Funktionalität einer Stromquelle und die eines elektroakustischen Schallwandlers.

6. Hörvorrichtung nach einem der vorhergehenden Ansprüche, wobei Stromquelle wiederaufladbar ist.

7. Hinter-dem-Ohr-Hörgerät mit
- einem Gehäuse (3) zum Tragen hinter dem Ohr,
- einer Otoplastik zum Tragen in/an dem Gehörgang des Ohrs,
- einer Verbindungsleitung, über die die Otoplastik mit dem Gehäuse verbunden ist, und
- einer Stromquelle,
**dadurch gekennzeichnet, dass**
- die Stromquelle in der Otoplastik angeordnet ist und Energie über die Verbindungsleitung zu dem Gehäuse (3) liefert oder das Gehäuse selbst die Stromquelle darstellt.

8. Hinter-dem-Ohr-Hörgerät nach Anspruch 7, wobei die Verbindungsleitung ein Schallschlauch mit elektrischen Leitungen ist.

9. Hinter-dem-Ohr-Hörgerät nach Anspruch 7 oder 8, wobei die Otoplastik elektrisch ausschließlich als Stromquelle dient und keine anderen elektronischen Komponenten, die einer anderen elektronischen Funktionalität dienen, beinhaltet.

10. Hinter-dem-Ohr-Hörgerät nach Anspruch 7, wobei die Otoplastik ausschließlich zwei elektronische Funktionalitäten beinhaltet, nämlich die Funktionalität einer Stromquelle und die eines elektroakustischen Schallwandlers.

11. Hinter-dem-Ohr-Hörgerät nach einem der Ansprüche 7 bis 10, wobei die Stromquelle wiederaufladbar ist.
